# EUROPÄISCHE PATENTANMELDUNG

(11) **EP 3 244 143 A1**
(43) Veröffentlichungstag der Anmeldung: **15.11.2017**
(21) Anmeldenummer: 17167700.8
(22) Anmeldetag: 24.04.2017
(51) Int. Cl.: F25B 49/02

(54) **KÜHLVORRICHTUNG**

(30) Priorität: 13.05.2016 DE 102016005958
(71) Anmelder: Liebherr-Transportation Systems GmbH & Co. KG, 2100 Korneuburg (AT)
(72) Erfinder: SCHÖNHOFER, Stefan, 2032 Enzersdorf im Thale (AT); SCHILLING, Florian, 1080 Wien (AT); RADLER, Dominik, 1160 Wien (AT); NITTNAUS, Ferdinand, 1210 Wien (AT)
(74) Vertreter: Laufhütte, Dieter

(57) **Zusammenfassung**

Die Erfindung betrifft eine Kühlvorrichtung (1), umfassend mindestens ein Kältekreismodul zum Erzeugen eines Kältekreises, wobei das Kältekreismodul zwei parallel geschaltete Kompressoren (2), die unabhängig voneinander schaltbar sind, einen Kondensator (4) mit Kondensatorlüfter (7), eine Drossel (5) und einen Verdampfer (3) mit Verdampferlüfter (6) aufweist. Darüberhin verfügt das Kältekreislaufmodul eine Steuereinheit mindestens einen Drucksensor. Die Steuereinheit beeinflusst den Druck indem die Drehzahlen von Kondensatorlüfter (7) und Verdampferlüfter (6) sowie der Öffnungsgrad der Drossel (5) geändert werden.

## Beschreibung

Die vorliegende Erfindung betrifft eine Kühlvorrichtung, insbesondere eine Kühlvorrichtung für eine Transporteinheit, nach dem Oberbegriff des Anspruchs 1.

Herkömmlicherweise verfügen Kühlvorrichtungen bzw. Kälteanlagen über leistungsstarke Kompressoren in ihrem Kältekreis. Es gibt jedoch Betriebssituationen der Kühlvorrichtung, in denen eine Leistungsreduzierung des Kompressors notwendig ist. Diese wird herkömmlicherweise durch eine Drehzahlreduktion, den Einsatz eines Bypasses oder anderer den Kältemittelmassenstrom an den Wärmeübertragern reduzierenden Maßnahmen realisiert.

Hierbei besteht jedoch das Problem, dass bei herkömmlichen Kühlvorrichtungen selbst bei einer so verminderten Leistungsanforderung mehr Last an der Versorgung anliegt als Kälteleistung benötigt wird. Vor allem bei hohen Außentemperaturen stellt dies ein Problem dar, dass zum Ausschalten des Systems führen kann.

Es ist ein Ziel der vorliegenden Erfindung die vorstehend aufgeführten Probleme zu überwinden. Dies gelingt mit einer Kühlvorrichtung, die die Merkmale des Anspruchs 1 umfasst.

Demnach umfasst die Kühlvorrichtung mindestens ein Kältekreismodul mit mindestens einem Kältekreis, wobei das Kältekreismodul zwei parallel geschaltete Kompressoren aufweist. Die Kühlvorrichtung ist dadurch gekennzeichnet, dass die zwei parallel geschalteten Kompressoren voneinander unabhängig schaltbar sind. Das Kältekreismodul ist dabei nicht auf die exakte Anzahl von zwei parallel geschalteten Kompressoren beschränkt, sondern kann zwei oder mehr zueinander parallel geschaltete Kompressoren aufweisen.

Durch das Vorsehen von mindestens zwei parallel geschalteten Kompressoren ist es möglich, die erforderliche Kälteleistung über einen großen Bereich exakt einzustellen. Zwei oder mehr Kompressoren pro Kältemodul erlauben, die erforderliche Kälteleistung exakt einzustellen, da auch das Abschalten eines der mehreren Kompressoren bzw. das Betreiben von nicht allen Kompressoren möglich ist. So wird beispielsweise beim Betreiben von nur einem Teil der im Kältekreis vorhandenen Kompressoren die effektive, wärmeübertragende Fläche relativ gesehen vergrößert.

Insbesondere für den Fall, dass der Druck im Kühlkreis, insbesondere auf dessen Hochdruckseite einen kritischen Wert überstiegen hat, kann hierdurch das Stoppen des Kühlkreises vermieden werden und ein Betrieb mit geringerer Kälteleistung fortgesetzt werden.

Gemäß einer optionalen Modifikation der Erfindung umfasst die Kühlvorrichtung mindestens ein zweites Kältekreismodul, das wie das erste Kältekreismodul über mindestens zwei parallel geschaltete Kompressoren verfügt.

Dieser Aufbau ist besonders flexibel und kann aufgrund des zusätzlichen Vorhandenseins der weiteren Verflüssiger und Kondensatoren eine besonders niedrige Kälteleistung zur Verfügung stellen, wenn dies erforderlich ist. So ist bei hohen Außentemperaturen die für die Kühlung des Kondensators angesaugte Luft oftmals zu warm, um den Kältekreis aufrecht zu erhalten.

Es kann vorgesehen sein, dass das mindestens eine Kältekreismodul einen Verdampfer, einen Verflüssiger und eine Drossel umfasst.

Das Kältekreismodul beschreibt dabei einen Kältekreis, in dem ein Kältemittel zirkuliert. In einem solchem Kältekreislauf wird das Kältemittel typischerweise mit Hilfe eines Kompressors unter einem erhöhten Druck einem Kondensator zugeführt. Das hierbei gasförmige Kältemittel kondensiert an dem Kondensator und geht in den flüssigen Zustand über. Die beim Phasenwechsel abgegebene Energie wird an die Außenseite des Kondensators an die Umgebungsluft über Wärme abgegeben. Nach Durchströmen einer Drossel verändert sich der Druckzustand des Kältemittels schlagartig, sodass die Verdampfungstemperatur des Kältemittels herabgesenkt wird. Die zum Übergang in dem gasförmigen Zustand benötigte Energie wird dabei der Umgebungsluft des Verdampfers entzogen, wodurch sich eine Temperaturverringerung in der Umgebung des Verdampfers ergibt. Im Anschluss daran wird das gasförmige Kältemittel vom Kompressor erneut angesaugt und der Kreislauf beginnt von vorne.

Gemäß einer Fortbildung der Erfindung umfasst das Kältekreismodul eine Drossel in Form eines Expansionsventils, vorzugsweise in Form eines elektronischen Expansionsventils.

Nach einer optionalen Modifikation der Erfindung weist das Kältekreismodul einen drehzahlvariablen Lüfter zum Beaufschlagen eines Verdampfers mit Luft und/oder einen drehzahlvariablen Lüfter zum Beaufschlagen eines Verflüssigers mit Luft auf, damit eine durch den jeweiligen Lüfter zu fördernde Luftmenge in Abhängigkeit der Drehzahl des Lüfters einstellbar ist.

Durch die Variationsmöglichkeit der auf den Verflüssiger und/oder den Verdampfer zu richtenden Luftmenge ist es möglich den Energieaustausch zwischen dem im Verdampfer bzw. Verflüssiger vorhandenen Kältemittel zu beeinflussen. Dadurch kann auf die im Kältekreis vorherrschenden Druckverhältnisse reagiert werden.

Vorzugsweise umfasst die Vorrichtung eine Steuereinheit zum Beeinflussen eines Drucks in dem Kältekreis des mindestens einen Kältekreismoduls.

Dabei ist beispielsweise möglich, dass die Steuereinheit dazu ausgelegt ist, einen Verdampferlüfter, einen Verflüssigerlüfter zu steuern oder mit dem mindestens zwei Kompressoren in Verbindung steht und diese je nach Druck entsprechend ansteuert.

Nach einer bevorzugten Ausführungsform der Erfindung weist die Vorrichtung ein Mittel zum Bestimmen eines Drucks in dem Kältekreis des mindestens einen Kältekreismoduls auf. Beispielsweise ist das Mittel zum Bestimmen des Drucks ein Drucksensor, der den im Kältekreis herrschenden Druck misst und den gemessenen Druckwert an die Steuereinheit übermittelt. In Abhängigkeit des gemessenen Druckwerts unternimmt die Steuereinheit entsprechende Steueraktionen, um den Druck unterhalb eines kritischen Druckwerts zu halten. Würde der Druck oberhalb des kritischen Druckwerts steigen, so wäre es erforderlich, die Kühlvorrichtung auszuschalten, um diese vor Beschädigungen durch den zu hohen Druck zu schützen.

Vorzugsweise ist die Steuereinheit dazu ausgelegt, in Abhängigkeit eines Drucks in dem Kältekreis des mindestens einen Kältekreismoduls eine Drehzahl eines Kondensatorlüfters und/oder eine Drehzahl eines Verdampferlüfters zu ändern. Die Regelung des Lüfters am Kondensator/Verflüssiger steuert die eingebrachte Last und somit die Wärme, die am Kondensator zusätzlich zur eingebrachten Leistung des Kompressors abgeführt werden muss. Ein Variieren der auf den Kondensator gerichteten Luftstrommenge hat demnach einen Einfluss auf den im Kältekreis vorherrschenden Druck. Erhöht man die Drehzahl des Kondensatorlüfters wird die beim Kondensationsvorgang des Kältemittels frei werdende Wärmeenergie effizient abgeführt, wodurch einem weiteren Ansteigen des Druckniveaus im Kältekreis entgegengewirkt wird.

In umgekehrter Weise ist es hierbei sinnvoll den Verdampferlüfter zu steuern, um in einem kritischen Druckbereich des Kältekreises einem weiteren Ansteigen des Drucks entgegenzuwirken.

Nach einer optionalen Modifikation der Erfindung ist die Steuereinheit dazu ausgelegt, in Abhängigkeit eines Drucks in dem Kältekreis des mindestens einen Kältekreismoduls einen Öffnungszustand einer Drossel in dem Kältekreis zu ändern, um einen Kältemittelmassenstrom in dem Kältekreis zu regulieren. Durch das weitere Öffnen bzw. Schließen einer Drossel in dem Kältekreis ist es möglich, ausgleichend auf das im Kältekreis vorherrschende Druckniveau zu wirken. Steigt beispielsweise das Druckniveau in einem kritischen Bereich, so führt ein Öffnen der Drossel mit einer damit einhergehenden Steigerung des durch die Drossel strömenden Kältemittelmassenstroms zu einer Druckverminderung. Dies liegt im Wesentlichen an der typischen Architektur des Kältekreises, bei dem die mindestens zwei parallel geschalteten Kompressoren über die Drossel (sowie alle weiteren oben genannten Komponenten) kurzgeschlossen sind. Ein Öffnen der Drossel vermindert demnach den Druck im Hochdruckbereich des Kältekreises, der sich vom Ausgang eines Kompressors bis zur Drossel erstreckt.

Nach einer weiteren Fortbildung der Erfindung ist die Steuereinheit dazu ausgelegt, in Abhängigkeit eines Drucks in dem Kältekreis des mindestens einem Kältekreismoduls mindestens einen der Kompressoren in einen An-Zustand oder einen Aus-Zustand zu versetzen und/oder einen Kompressor Takt von mindestens einem der Kompressoren zu ändern, vorzugsweise zu verringern.

Das Vorhandensein von mindestens zwei Kompressoren pro Kältekreis ergibt ein sehr wirkungsvolles Mittel zum Einstellen der Kälteleistung, indem die Möglichkeit geschaffen wird, einen der mindestens zwei Kompressoren abzuschalten. Dadurch wird die effektive, wärmeübertragende Fläche, die sich vor allem durch den Kondensator ergibt, für den oder die nicht abgeschalteten Kompressoren vergrößert. Als Alternative oder als zusätzliche Maßnahme hierzu kann darüber hinaus die Taktung eines Kompressors variiert werden, um im Falle eines kritischen Druckniveaus im Kältekreis ein stabiles Niveau zu erreichen.

Gemäß einer bevorzugten Ausführungsform ist die Steuereinheit bei Überschreiten eines vorbestimmten Drucks dazu ausgelegt, den Kondensatorlüfter mit maximaler Geschwindigkeit rotieren zu lassen. Eine maximale Kondensatorbelüftung, die durch Ansteuern der Drehzahl des Kondensatorlüfters auf dessen maximalen Wert erreicht wird, führt zu einem effektiven Abtransportieren der an die Luft nahe des Kondensators abgegebenen Wärme, die beim Kondensationsprozess des Kältemittels entsteht.

Vorzugsweise ist die Steuereinheit beim Überschreiten eines vorbestimmten Drucks dazu ausgelegt, den Verdampferlüfter mit einer minimalen Geschwindigkeit rotieren zu lassen oder zu stoppen.

Darüber hinaus kann vorgesehen sein, dass die Steuereinheit bei Überschreiten eines vorbestimmten Drucks dazu ausgelegt ist, einen der mindestens zwei Kompressoren von einem Ein-Zustand in einen Aus-Zustand zu überführen und/oder einen Kompressortakt zu verringern. Das gezielte Wegschalten eines von mehreren einem Kältekreis zugeordneten Kompressoren wirkt sich direkt auf die vom Kältekreis erzeugte Kälteleistung aus, sodass bei einer geringen Leistungsanforderung kein Überschuss der Kälteleistung erzeugt wird, der typischerweise für das Ansteigen eines Druckniveaus im Kältekreis verantwortlich ist.

Ähnlich verhält es sich mit der Verringerung eines Kompressortakts von mindestens einem der mehreren einem Kältekreis zugeordneten Kompressoren.

Vorzugsweise ist die Steuereinheit bei Überschreiten eines vorbestimmten Drucks ferner dazu ausgelegt, einen Massestrom vom Kältemittel in dem Kältekreis durch Verändern eines Öffnungszustands einer Drossel zu vergrößern.

Gemäß einer optionalen Modifikation der Erfindung ist die Kühlvorrichtung eine Kühlvorrichtung für eine Transporteinheit, insbesondere für einen Kühl-Sattelauflieger, einen Kühlanhänger oder einen Kühltransportcontainer.

Weitere Einzelheiten, Merkmale und Vorteile der Erfindung werden anhand der nachfolgend beschriebenen Figuren ersichtlich. Es zeigen:
- Fig. 1:: den schematischen Grundaufbau einer erfindungsgemäßen Kühlvorrichtung,
- Fig. 2:: eine Maßnahmenpyramide zum Halten eines Hochdrucks des Kältekreises unter einer kritischen Grenze,
- Fig. 3:: ein Ablaufdiagramm zur Darstellung eines Verfahrens bei einem oberhalb eines Schwellenwerts liegenden Drucks des Kältekreises im Betrieb, und
- Fig. 4:: ein Ablaufdiagramm zur Illustration eines Startvorgangs eines Kältekreises bei einer hohen Umgebungstemperatur.

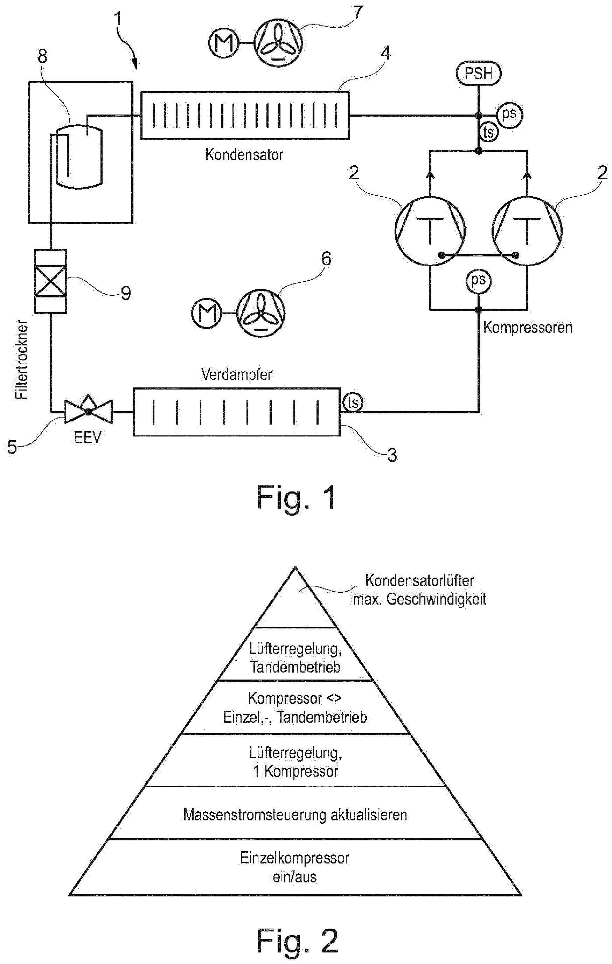

Fig. 1 zeigt ein Kältekreismodul 1, das einen Kältekreis aufweist. Das Kältekreismodul 1 umfasst mindestens einen Kompressor 2, einen Kondensator 4 (auch Verflüssiger genannt), eine Drossel 5 und einen Verdampfer 3. Diese Bauteile sind in der Reihenfolge Kompressor 2, Kondensator 4, Drossel 5, Verdampfer 3 sowie erneut Kompressor 2 miteinander über Leitungen verbunden und formen so einen Kältekreislauf. Durch den Kältekreislauf strömt ein Kältemittel, das aufgrund der Kompression eine unterschiedliche Siede - bzw. Kondensationstemperatur im Kondensator 4 und dem Verdampfer 3 aufweist.

Dadurch ist es möglich, der Umgebungsluft des Verdampfers 3 Energie zu entziehen und an die Umgebungsluft des Kondensators 4 Energie abzugeben. Darüber hinaus besitzt das Kältekreismodul 1 einen Verdampferlüfter 6, der den Verdampfer 3 mit einem Luftstrom beaufschlagen kann. Dadurch wird die in der Umgebung des Verdampfers 3 abgekühlte Luft beispielsweise in einen zu kühlenden Raum ausgeblasen und gleichzeitig die Umgebung des Verdampfers 3 mit noch nicht gekühlter Luft oder wieder erwärmter Luft versorgt. Weiter kann auch der Kondensator 4 einen Kondensatorlüfter 7 aufweisen, der die durch den Kondensator 4 erwärmte Luft abführt.

Die Kühlvorrichtung der Erfindung umfasst mindestens zwei parallel geschaltete Kompressoren 2, die voneinander unabhängig schaltbar sind. Es ist also möglich nicht alle der mindestens zwei Kompressoren 2 zu betreiben, sodass die Gesamtkompressorleistung der mindestens zwei Kompressoren 2 variierbar ist. Ferner zeigt das Kältekreismodul 1 einen Filtertrockner 9, der zwischen der Drossel 5 und den Kondensator 4 angeordnet ist. Zwischen dem Filtertrockner 9 und dem Kondensator 4 befindet sich zudem ein Kältemitteltank 8.

Durch die parallele Anordnung der zwei Kompressoren 2 in dem Kältekreis kann der Druck auf der Hochdruckseite des Kältekreises, die sich vom Ausgang der Kompressoren 2 bis zur Drossel 5 erstreckt, effektiv geregelt werden. So ist es beispielsweise möglich, dass nach einem Erkennen eines kritischen Druckwerts im Hochdruckbereich einer der beiden Kompressoren 2 in einen Aus-Zustand versetzt wird, um das Druckniveau im Kältekreis nicht weiter zu erhöhen bzw. abzusenken. Vorteilhaft hierbei ist, dass trotz des Abschaltens von einem Kompressor 2, der Kältekreislauf dennoch weiter zirkuliert. Es ist also möglich, die Kälteleistung des Kältekreislaufs zu reduzieren ohne dabei den Kältekreislauf komplett zu stoppen. Dies gelingt in besonders vorteilhafter Weise durch die parallele Anordnung der mindestens zwei Kompressoren 2. Darüber hinaus kann dies jedoch auch über die Drehzahlregelung des Kondensatorlüfters 7, die Drehzahlregelung des Verdampferlüfters 6 ein Öffnen der Drossel 5 zum Regulieren des Kältemittelmassenstroms und/oder eine Verringerung der Taktrate eines der mehreren Kompressoren 2 gelingen, wobei jede dieser Maßnahmen einen unterschiedlichen Einfluss auf eine Variation des Druckniveaus besitzt.

Fig. 2 zeigt eine pyramidenförmige Darstellung, der die unterschiedlichen Mittel zum Regeln bzw. zur Beeinflussung des Druckniveaus übereinander angeordnet sind. Die effektivsten Mittel, also diejenigen, die das Druckniveau besonders stark beeinflussen können, sind am Boden der Pyramide angeordnet, wobei die Effektivität des Mittels nach oben hin abnimmt. Befolgt man sämtliche Schritte dieser Pyramide von unten nach oben, so erhält man zudem eine Startprozedur eines Kältekreislaufmoduls der Erfindung bei hohen Außentemperaturen.

Das für eine Bestimmung des Drucks wirkungsvollste Mittel ist demnach das Ein- bzw. Ausschalten eines einzelnen Kompressors. Als weitere Maßnahme folgt hierzu die Steuerung des Kältemittelmassestroms, die vorzugsweise durch eine Variation des Öffnungszustands der Drossel 5, die ein elektronisches Expansionsventil sein kann, hervorgerufen wird. In der Pyramide ist darüber ferner die Maßnahme angeordnet, gemäß der der Verdampferlüfter beim Betrieb des Kältekreises mit einem Kompressor 2 eingestellt wird. Die nächste Maßnahme ist dann das Umschalten des Kältekreislaufs vom Betrieb mit einem Kompressor in den Tandembetrieb also dem Parallelbetrieb der beiden Kompressoren 2. Als weiterer den Druck beeinflussender Faktor ist dann das Regeln des Verdampferlüfters 6 bei einem im Tandembetrieb betriebenen Kältekreislauf vorgesehen, wobei die Spitze der Pyramide durch das Einstellen des Kondensatorlüfters 7 auf seine maximale Geschwindigkeit charakterisiert ist.

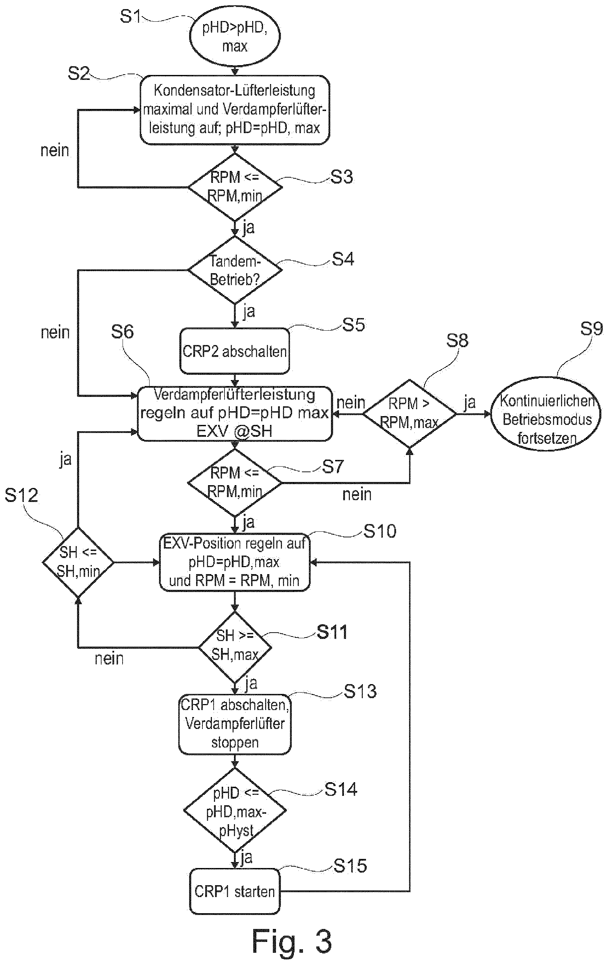

Fig. 3 zeigt ein Ablaufdiagramm für einen Zustand, falls im Hochdruckbereich des Kältekreislaufs ein kritischer Wert überschritten ist.

In S1 wird detektiert, ob der Hochdruck des Kühlkreislaufs pHD einen maximal zulässigen Druck pHD,max übersteigt. Wird diese Grenze des Drucks überstiegen, wird in S2 der Kondensatorlüfter auf eine maximale Leistungsstufe eingestellt und der Verdampferlüfter in einen Zustand versetzt, der einen Zustand, bei dem der Druck pHD den Grenzdruck pHD,max entspricht, eingestellt.

Dann wird in S3 geprüft, ob die Umdrehungsgeschwindigkeit des Verdampferlüfters kleiner oder gleich einer minimalen Umdrehungsgeschwindigkeit des Verdampferlüfters entspricht. Ist dies nicht der Fall, wird erneut in S2 verzweigt. Liegen die Umdrehungen pro Minute des Verdampferlüfters jedoch unterhalb der in S3 geprüften Schwelle, so wird in S4 geprüft, ob ein Tandembetrieb der Kompressoren 2 vorliegt. Ist dies der Fall, wird einer der beiden Kompressoren in den Aus-Zustand versetzt (S5). Wurde der Kältekreislauf nicht in dem Tandembetrieb betrieben, so wird S5 übersprungen und direkt in S6 verzweigt. Hierin wird die Leistung des Verdampferlüfters auf den Zustand eingestellt, gemäß dem der Druck pHD gleich dem Grenzdruck pHD,max ist und gleichzeitig die Drossel in Form eines Expansionsventils auf einen Überhitzungszustand eingestellt. Vorzugsweise ist der Überhitzungszustand der Drossel bzw. des Expansionsventils ein Zustand, in dem die Drossel offensteht oder im Vergleich zu ihrer vorherigen Stellung etwas mehr geöffnet worden ist.

Im Folgenden wird dann in S7 übergegangen, wobei hier geprüft wird, ob die Umdrehungsgeschwindigkeit des Verdampferlüfters unterhalb eines unteren Schwellwerts RPM,min liegt. Falls nicht, wird in S8 geprüft, ob die Umdrehungsgeschwindigkeit RPM größer als ein oberer Schwellenwert RPM,max des Verdampferlüfters liegt. Ist dies nicht der Fall, wird erneut in S6 verzweigt. Ist die in S8 geprüfte Bedingung erfüllt, wird in S9 verzweigt und mit einem kontinuierlichen Betriebsmodus fortgefahren.

Ist die Prüfung in S7 positiv ausgefallen, ist also die Umdrehungszahl RPM kleiner oder gleich einer minimalen Umdrehungszahl RPM,min, wird in S10 die Stellung des Expansionsventils auf den Zustand pHD = pHD,max und RPM = RPM,min eingestellt. Danach wird in S11 geprüft, ob die Überhitzungstemperatur SH größer oder gleich einen maximalen Schwellenwert für Überhitzungstemperatur SH,max ist. Ist dies nicht der Fall, wird in S12 verzweigt, wo geprüft wird, ob die Überhitzungstemperatur kleiner oder gleich einem unteren Schwellenwert für die Überhitzungstemperatur ist. Falls dies so ist, wird in den Schritt S6 verzweigt. Fall dies nicht so ist, wird in den Schritt S10 verzweigt.

Ausgehend von S11 wird bei einer positiven Prüfung, ob die Überhitzungstemperatur größer oder gleich einem oberen Schwellenwert der Überhitzungstemperatur ist, in S13 der verbleibende einzelne Kompressor abgeschaltet und der Verdampferlüfter gestoppt. Im Anschluss daran, wird in S14 eine Prüfung durchgeführt, ob der Hochdruck des Kühlkreislaufs kleiner oder gleich dem Grenzwert für den Hochdruck minus einen Hysteresewert zum Takten von Kompressoren ist. Erst wenn diese Bedingung erfüllt ist, wird in S15 der erste Kompressor gestartet und im Anschluss daran in S1 verzweigt.

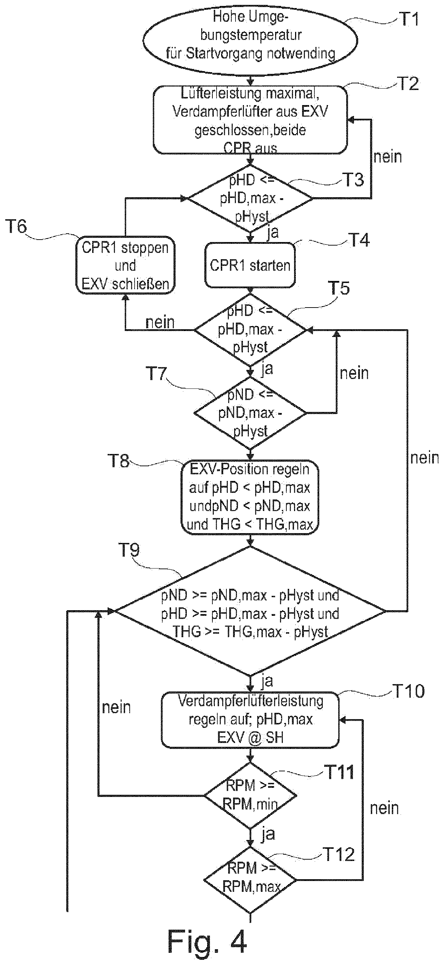

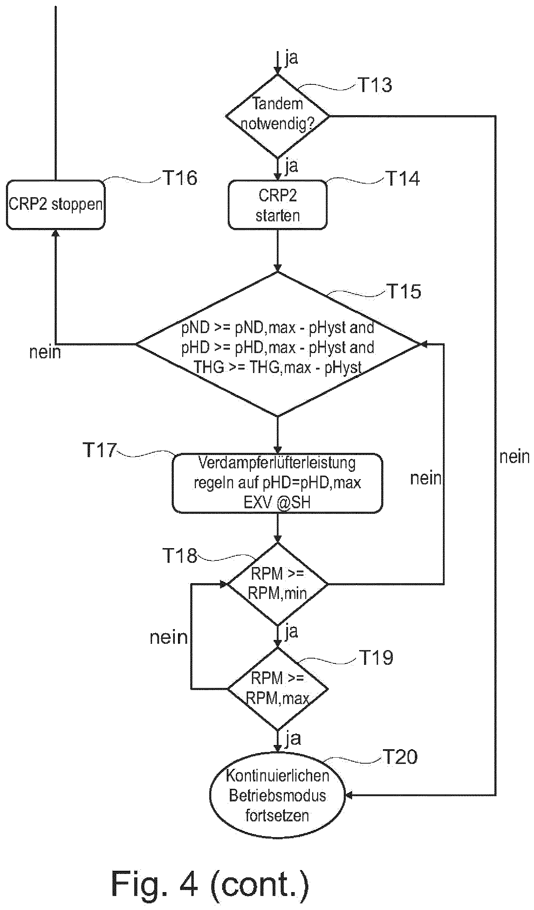

Fig. 4 zeigt ein Ablaufdiagramm für das Starten einer Kühlvorrichtung bei einer hohen Außentemperatur. Der besseren Übersichtlichkeit halber erstreckt sich das Ablaufdiagramm über zwei Zeichnungsseiten.

In T1 wird entschieden, dass ein Start, der für hohe Umgebungstemperaturen ausgelegt ist, erforderlich ist. Demzufolge wird in T2 die Leistung des Kondensatorlüfters auf maximal gestellt, der Verdampferlüfter wird in den Aus-Zustand versetzt, die Drossel in Form eines elektrischen Expansionsventils wird geschlossen und beide Kompressoren werden in den Aus-Zustand versetzt. Ausgehend von diesem Zustand wird in T3 geprüft, ob der Druck pHD im Hochdruckbereich des Kältekreislaufs kleiner oder gleich einem Grenzdruck pHD,max minus einen Druckhysteresewert pHyst zum Takten eines Kompressors ist. Ist diese Bedingung nicht erfüllt, so wird in T2 verzweigt. Anderenfalls wird der erste Kompressor in T4 gestartet und nachfolgend erneut in T5 geprüft, ob der Druck pHD kleiner oder gleich dem Grenzdruck pHD,max minus den Hysteresedruck pHyst ist. Ist dies nicht der Fall, wird der Kompressor gestoppt und das Expansionsventil geschlossen (T6), bevor erneut in T3 verzweigt wird.

Ist der Druck kleiner oder gleich als der in T5 zulässige Schwellenwert, so wird in T7 verzweigt. Hierin wird geprüft, ob der Niederdruck pND des Kältekreislaufs kleiner oder gleich einem oberen Schwellenwert pND,max des Niederdrucks abzüglich eines Hysteresewerts pHyst ist. Ist dies nicht der Fall wird in T5 verzweigt. Anderenfalls wird die Stellung der Drossel so eingestellt, dass sie den nachfolgenden Zuständen Rechnung trägt, wobei der Hochdruckwert des Kühlkreislaufs kleiner dem oberen Grenzdruck des Hochdruckwerts ist und der Niederdruckwert des Kühlkreislaufs kleiner einem oberen Grenzdruckwert des Niederdrucks ist und die Heißgastemperatur THG des Kompressors kleiner als ein oberer Schwellenwert der Heißgastemperatur THG,max des Kompressors ist. Im Anschluss daran wird in T9 geprüft, ob der Hochdruckwert kleiner oder gleich dem oberen Schwellenwert des Hochdruckwerts minus einen Hysteresedruck zum Takten eines Kompressors ist, ob der Niederdruckwert kleiner oder gleich den oberen Schwellenwert eines Niederdruckwerts minus einem Hysteresedruckwert zum Takten eines Kompressors ist und ob die Heißgastemperatur des Kompressors kleiner oder gleich dem oberen Schwellenwert der Heißgastemperatur des Kompressors minus einen Hysteresewert zum Takten des Kompressors ist. Sind diese Bedingungen nicht erfüllt, wird in T5 verzweigt.

Anderenfalls wird in T10 die Leistung des Verdampfungslüfters so gesteuert, um einen Hochdruckwert gleich dem oberen Schwellenwert des Hochdruckwerts und eine Stellung der Drossel für einen Überhitzungszustand zu erreichen. Anschließend wird in T11 geprüft, ob die Umdrehungsgeschwindigkeit des Verdampferlüfters größer oder gleich einem unteren Schwellenwert der Umdrehungsgeschwindigkeit entspricht. Ist dies nicht der Fall, wird in T9 verzweigt.

Anderenfalls wird in T12 geprüft, ob die Umdrehungsgeschwindigkeit des Verdampferlüfters größer oder gleich einem oberen Schwellenwert der Umdrehungsgeschwindigkeit des Verdampferlüfters ist. Ist dies nicht der Fall, wird in T10 verzweigt. Anderenfalls wird in T13 geprüft, ob der Tandembetrieb von parallel geschalteten Kompressoren erforderlich ist. Falls nicht, wird in T20 verzweigt und ein kontinuierlicher Betriebsmodus fortgeführt.

Falls in T13 zu dem Ergebnis gekommen wird, dass ein Tandembetrieb erforderlich ist, wird in T14 der zweite Kompressor gestartet.

Im Anschluss daran wird geprüft, ob der Druck auf der Hochdruckseite pHD kleiner oder gleich den Grenzwert für den Druck pHD,max auf der Hochdruckseite minus einen Hysteresewert pHyst für das Takten des Kompressors ist und ob ein Druckwert auf der Niederdruckseite pND kleiner oder gleich einen oberen Schwellenwert pND,max minus einen Hysteresewert pHyst für das Takten eines Kompressors ist und ob die Heißgastemperatur THG eines Kompressors kleiner oder gleich einen oberen Schwellenwert THG,max für die Heißgastemperatur eines Kompressors minus einen Hysteresewert pHyst ist. Ist eine dieser Bedingungen nicht erfüllt, so wird in T16 verzweigt und der zweite Kompressor gestoppt. Im Anschluss daran wird dann in T9 verzweigt.

Sind sämtliche der in T15 geprüften Bedingungen erfüllt, so wird die Leistung des Verdampferlüfters in T17 auf einen Zustand eingestellt, indem der Druck auf der Hochdruckseite gleich dem oberen Schwellenwert des Drucks auf der Hochdruckseite ist und indem das Expansionsventil auf eine Überhitzungstemperatur eingestellt ist.

Im Anschluss daran wird in T17 die Umdrehungsgeschwindigkeit des Verdampferlüfters untersucht und geprüft, ob diese größer oder gleich einem unteren Schwellenwert für die Umdrehungsgeschwindigkeit des Verdampferlüfters ist. Ist dies nicht der Fall, wird in T15 verzweigt.

Anderenfalls wird in T19 geprüft, ob die Umdrehungsgeschwindigkeit des Verdampferlüfters größer oder gleich einem oberen Schwellenwert der Umdrehungsgeschwindigkeit des Verdampferlüfters ist. Ist dies nicht der Fall, wird in T18 verzweigt.

Erfüllt die Umdrehungsgeschwindigkeit die in T19 geprüfte Bedingung, wird nach T20 verzweigt und ein kontinuierlicher Betrieb fortgeführt.

## Patentansprüche

1. Kühlvorrichtung, umfassend:
mindestens ein Kältekreismodul (1) das mindestens einen Kältekreis umfasst, wobei
das Kältekreismodul (1) mindestens zwei parallel geschaltete Kompressoren (2) aufweist,
**dadurch gekennzeichnet, dass**
die mindestens zwei parallel geschalteten Kompressoren (2) voneinander unabhängig schaltbar sind.

2. Vorrichtung nach Anspruch 1, wobei die mehreren Kompressoren pro Kältemodul einen gemeinsamen Verdampfer, der mit einem Luftstrom in thermischem Kontakt steht, und einen gemeinsamen Verflüssiger (4), der mit einem anderen Luftstrom in thermischem Kontakt steht, umfassen.

3. Vorrichtung nach einem der vorhergehenden Ansprüche, wobei das mindestens eine Kältekreismodul (1) einen Verdampfer (3), einen Verflüssiger (4) und eine Drossel (5) umfasst.

4. Vorrichtung nach einem der vorhergehenden Ansprüche, wobei das Kältekreismodul (1) eine Drossel (5) in Form eines Expansionsventils, vorzugsweise in Form eines elektronischen Expansionsventils umfasst.

5. Vorrichtung nach einem der vorhergehenden Ansprüche, wobei das Kältekreismodul (1) einen drehzahlvariablen Lüfter (6) zum Beaufschlagen eines Verdampfers (3) mit Luft und/oder einen drehzahlvariablen Lüfter (7) zum Beaufschlagen eines Verflüssigers (4) mit Luft aufweist, damit eine durch den Lüfter (6, 7) zu fördernde Luftmenge in Abhängigkeit der Drehzahl des Lüfters (6, 7) einstellbar ist.

6. Vorrichtung nach einem der vorhergehenden Ansprüche, ferner umfassend eine Steuereinheit zum Beeinflussen eines Drucks in dem Kältekreis des mindestens einen Kältekreismoduls (1), vorzugsweise durch Regelung der Komponenten aus einem der vorhergehenden Ansprüche.

7. Vorrichtung einem der vorhergehenden Ansprüche, ferner umfassend ein Mittel zum Bestimmen eines Drucks in dem Kältekreis des mindestens einen Kältekreismoduls (1).

8. Vorrichtung nach einem der Ansprüche 6 oder 7, wobei die Steuereinheit dazu ausgelegt ist, in Abhängigkeit eines Drucks in dem Kältekreis des mindestens einen Kältekreismoduls (1), eine Drehzahl eines Kondensatorlüfters (7) und/oder eine Drehzahl eines Verdampferlüfters (6) zu ändern.

9. Vorrichtung nach einem der Ansprüche 6 bis 8, wobei die Steuereinheit dazu ausgelegt ist, in Abhängigkeit eines Drucks in dem Kältekreis des mindestens einen Kältekreismoduls (1), einen Öffnungszustand einer Drossel (5) in dem Kältekreis zu ändern, um einen Kältemittelmassenstrom in dem Kältekreis zu regulieren.

10. Vorrichtung nach einem der Ansprüche 6 bis 9, wobei die Steuereinheit dazu ausgelegt ist, in Abhängigkeit eines Drucks in dem Kältekreis des mindestens einen Kältekreismoduls (1), mindestens einen der Kompressoren (2) in einen An- oder Aus-Zustand zu versetzen und/oder einen Kompressortakt von mindestens einem der Kompressoren (2) zu ändern.

11. Vorrichtung nach einem der Ansprüche 6 bis 10, wobei die Steuereinheit bei Überschreiten eines vorbestimmten Drucks dazu ausgelegt ist, den Kondensatorlüfter (7) mit maximaler Geschwindigkeit rotieren zu lassen.

12. Vorrichtung nach einem der Ansprüche 6 bis 11, wobei die Steuereinheit bei Überschreiten eines vorbestimmten Drucks dazu ausgelegt ist, den Verdampferlüfter (6) mit einer minimalen Geschwindigkeit rotieren zu lassen oder zu stoppen.

13. Vorrichtung nach einem der Ansprüche 6 bis 12, wobei die Steuereinheit bei Überschreiten eines vorbestimmten Drucks dazu ausgelegt ist, einen der mindestens zwei Kompressoren (2) von einem Ein-Zustand in einen Aus-Zustand zu überführen und/oder einen Kompressortakt zu verringern.

14. Vorrichtung nach einem der vorhergehenden Ansprüche, wobei die Kühlvorrichtung eine Kühlvorrichtung für eine Transporteinheit, insbesondere für einen Kühl-Sattelauflieger, einen Kühlanhänger oder einen Kühltransportcontainer ist.
